# EUROPÄISCHE PATENTSCHRIFT

(11) **EP 1 329 252 B1**
(45) Veröffentlichungstag und Bekanntmachung des Hinweises auf die Patenterteilung: **01.08.2007**
(21) Anmeldenummer: 03000882.5
(22) Anmeldetag: 15.01.2003
(51) Int. Cl.: B01D 50/00, B01D 45/12, F15B 21/04

(54) **Vorrichtung zur Flüssigkeitsabscheidung und Filterung von komprimierten Gasen**
Apparatus for removing liquid from and filtering compressed gases
Dispositif pour filtrer et séparer des liquides de gaz comprimés

(30) Priorität: 16.01.2002 DE 10201486
(43) Veröffentlichungstag der Anmeldung: 23.07.2003
(73) Patentinhaber: BAUER KOMPRESSOREN GmbH, D-81477 München (DE)
(72) Erfinder: Hacker, Stefan, Dipl.-Ing., 82131 Stockdorf (DE)
(74) Vertreter: Hering, Hartmut

(56) Entgegenhaltungen:
- DE-A- 10 019 293
- US-A- 4 092 137
- US-A- 5 053 126
- US-A- 5 676 717

## Beschreibung

Die Erfindung befaßt sich mit einer Vorrichtung zur Flüssigkeitsabscheidung und Filterung von komprimierten Gasen, insbesondere Druckluft, Stickstoff, Edelgase, Erdgase oder dergleichen, wobei die Filterung der Trocknung und Reinigung des komprimierten Gases dient. Insbesondere ist eine solche Vorrichtung bei die Erzeugung von komprimierter Atemluft von großer Bedeutung. US-A-5 676 717 offenbart eine solche Vorrichtung.

Es gibt bereits eine Vorrichtung zur Flüssigkeitsabscheidung und Filterung für eine Trocknung und Reinigung von komprimierten Gasen, welche einen Behälter aufweist, der bodenseitig und oberseitig geschlossen ist, in dessen Innenraum konzentrisch zueinander eine Flüssigkeitsabscheideeinrichtung und eine Filtereinrichtung angeordnet sind, welche vorzugsweise in Form einer Filterpatrone ausgelegt ist. In einem äußeren konzentrischen Ringraum ist eine nach dem Zentrifugalprinzip arbeitende Flüssigkeitsabscheideeinrichtung angeordnet, die einen Abscheideraum und einen Kondensatsammelraum umfaßt, und mittels einer Trennwand gegenüber der konzentrisch innenliegenden Filtereinrichtung in Form einer Filterpatrone körperlich, aber nicht strömungstechnisch getrennt ist. Bei dieser Vorrichtung tritt das komprimierte Gas zuerst in die Zentrifugal-Flüssigkeitsabscheideeinrichtung ein, in welcher Flüssigkeit beispielsweise in Tröpfchenform von dem Gasstrom abgeschieden wird, welche dann in einem Kondensatsammelraum aufgefangen wird. Die Austrittsseite der Flüssigkeitsabscheideeinrichtung ist strömungskommunizierend mit der nachgeschalteten Filtereinrichtung zur Trocknung und Reinigung verbunden, wobei die Trennwand zwischen der konzentrisch außenliegenden Flüssigkeitsabscheideeinrichtung und der konzentrisch innenliegenden Filtereinrichtung eine Strömungsumlenkung bewirkt.

Wenn bei dieser bekannten aber nicht veröffentlichten, Vorrichtung die Trennwand zwischen den beiden konzentrisch angeordneten Flüssigkeitsabscheideeinrichtung und der Filtereinrichtung ein Leck bekommt, kann mittels der Flüssigkeitsabscheideeinrichtung abgeschiedene Flüssigkeit in die nachgeschaltete Filtereinrichtung gelangen, worunter die Betriebszuverlässigkeit einer solchen Vorrichtung leidet. Ferner hat die bekannte Vorrichtung einen relativ großen Durchmesser, da die innenliegende Filtereinrichtung konzentrisch von der außenliegenden Flüssigkeitsabscheideeinrichtung unter Zwischenlage einer Trennwand angeordnet ist, so daß eine solche Vorrichtung relativ viel Einbauraum in Anspruch nimmt.

Die Erfindung zielt daher darauf ab, unter Überwindung der zuvor geschilderten Schwierigkeiten eine Vorrichtung zur Flüssigkeitsabscheidung und Filterung für eine Trocknung und Reinigung von komprimierten Gasen bereitzustellen, welche einen möglichst kompakten Aufbau hat, betriebszuverlässig arbeitet und insbesondere auch einen verbesserten Flüssigkeitsabscheidegrad verwirklicht.

Nach der Erfindung wird hierzu eine Vorrichtung gemäß dem Anspruch 1. Bei der erfindungsgemäßen Auslegung der Vorrichtung läßt sich somit der Durchmesser der Vorrichtung beträchtlich reduzieren, so daß die Vorrichtung einen verminderten Einbauraum in Anspruch nimmt, und auch bei gedrängten Platzverhältnissen ohne Schwierigkeiten untergebracht werden kann.

Bei der erfindungsgemäßen Auslegung der Vorrichtung wird dies insbesondere dadurch erreicht, daß im gemeinsamen Behälter die Flüssigkeitsabscheideeinrichtung mit dem Abscheideraum und dem Kondensatsammelraum in einem gesonderten Bereich strömungstechnisch axial vor der Filtereinrichtung liegend angeordnet ist. Hierdurch kann eine gesonderte Trennwand zwischen der Flüssigkeitsabscheideeinrichtung und der Filtereinrichtung ersatzlos entfallen, da die Filtereinrichtung, welche vorzugsweise in Form einer Filterpatrone ausgelegt ist, insbesondere mit ihrem Boden direkt die räumliche Trennung zu der axial vorgeschalteten Flüssigkeitsabscheideeinrichtung bildet. Daher läßt sich bei der erfindungsgemäßen Vorrichtung auch die Betriebssicherheit erhöhen, da die Gefahr einer Leckstellenbildung bei einer Trennwand entfällt.

Da durch die axial hintereinander liegende Anordnung von Flüssigkeitsabscheideeinrichtung und Filtereinrichtung das die Flüssigkeitsabscheideeinrichtung verlassende komprimierte Gas auch einen weiteren Weg entlang der Filtereinrichtung bis zu dem Eintritt in dieselben zurücklegen muß, kann dieser Bereich auch als Feinabscheideeinrichtung genutzt werden, da das spiralförmig strömende komprimierte Gas auf diesem Weg zum Eintritt in die Filtereinrichtung noch auf die kühlere Behälterwandung trifft, und hierdurch eine weitere Feinabscheidung oder Nachabscheidung bis zum Eintritt in die Filtereinrichtung erfolgen kann. Hierdurch läßt sich also auch der Flüssigkeitsabscheidegrad zusätzlich noch steigern.

Ferner ist die Filterpatrone der Filtereinrichtung unter Freilassung eines kleinen Ringspalts zur Gehäuseinnenwand in dem Behälterinneren angeordnet, wobei der Ringspalt in kommunizierender Verbindung mit der Austrittsseite der Flüssigkeitsabscheideeinrichtung steht. In diesem kleinen und schmalen Ringspalt wird das die Flüssigkeitsabscheideeinrichtung verlassende komprimierte Gas beschleunigt. Durch die Enge des Spaltes erhöht sich die Turbulenz der Strömung. Dadurch verbessert sich die Kondensatabscheidung an der Filterpatronenwand und an der kühleren Behälterinnenwand, so daß auf dieser Wegstrecke bis zum Eintritt in die Filtereinrichtung noch eine weitere Flüssigkeits-Nachabscheidung oder -Feinabscheidung erfolgen kann. Daher hat die erfindungsgemäße Vorrichtung einen äußerst günstigen Flüssigkeitsabscheidegrad.

Vorzugsweise ist die Vorrichtung nach der Erfindung derart ausgelegt, daß das komprimierte Gas im Bereich des Boden des Behälters in den Abscheideraum der Flüssigkeitsabscheideeinrichtung eintritt, und der Kondensatsammelraum im Zusammenwirken mit dem Behälterboden gebildet wird. Somit braucht also nur der Behälterbodenbereich in entsprechender Weise derart ausgestaltet zu werden, daß man an einer möglichst tiefliegenden Stelle einen Kondensatsammelraum hat, in welchem sich der mittels der Flüssigkeitsabscheideeinrichtung abgetrennte Flüssigkeitsanteil sammelt. Hierdurch erhält man eine möglichst kompakt ausgelegte und einfach herzustellende Vorrichtung, insbesondere auch im Zentrifugal-Flüssigkeitsabscheidebereich.

Zweckmäßigerweise ist die Vorrichtung nach der Erfindung derart ausgelegt, daß der Boden der axial nachgeschaltet angeordneten Filterpatrone unmittelbar den Abscheideraum der Flüssigkeitsabscheideeinrichtung begrenzt. Daher benötigt man zur räumlichen und körperlichen Trennung von Abscheideraum und Filtereinrichtung keine gesonderte, zusätzliche Einrichtungen, sondern der Boden der Filterpatrone dient selbst als eine der Begrenzungswände des Abscheideraums der Flüssigkeitsabscheideeinrichtung. Hierdurch vereinfacht sich der Aufbau der erfindungsgemäßen Vorrichtung insbesondere in konstruktiver und herstellungstechnischer Hinsicht wesentlich.

Alaternativ kann eine Trennwand unterhalb der Filterpatrone im gemeinsamen Behälter angeordnet sein, welche zusätzlich zur Begrenzung des Abscheideraums vorgesehen sein kann.

Gemäß einer bevorzugten Ausführungsform nach der Erfindung ist die Auslegung derart getroffen, daß das komprimierte Gas über ein Eintrittsröhrchen eintritt, welches in den Abscheideraum der axial unterhalb der Filterpatrone angeordneten Flüssigkeitsabscheideeinrichtung ragt, und wenigstens eine Austrittsöffnung in der Nähe seines oberen Endes hat. Bei der erfindungsgemäßen Lösung reicht somit ein axial relativ kurz bemessenes Eintrittsröhrchen für das komprimierte Gas aus, und der Abscheideraum wird unmittelbar durch das Bodenteil des Gehäuses und durch die Gehäuseinnenwand gebildet und begrenzt. Bei einer solchen Auslegungsform wird insbesondere der Kondensatsammelraum von dem tieferliegenden Bereich des Abscheideraums gebildet, welcher auch einen axialen Abstand zu dem Boden der Filterpatrone von dem Austritt im Bodenbereich der Filterpatrone hat, so daß auf betriebszuverlässige Weise erreicht wird, daß das Kondensat im Kondensatsammelraum nicht wieder in den Gasstrom zurück gelangen kann, welcher durch die Filterpatrone der Filtereinrichtung durchgegangen ist, und der dann an der Bodenseite des Behälters austritt. Hierdurch lassen sich in wirksamer Weise Rückvermischungen mit dem gereinigten und getrockneten komprimierten Gasstrom vermeiden.

Zusammenfassend ist es bei der Erfindung wesentlich, daß die Flüssigkeitsabscheideeinrichtung und die Filtereinrichtung zur Trocknung und Reinigung von komprimierten Gasen räumlich axial hintereinander angeordnet sind, und daß die Filtereinrichtung axial über der Zentrifugal-Flüssigkeitsabscheideeinrichtung ohne jegliche zusätzliche Trennwände angeordnet ist, wobei insbesondere zwischen der Außenwand der Filterpatrone der Filtereinrichtung und der Innenwand des Gehäuses ein enger Ringspalt gebildet wird, welcher eine Flüssigkeits-Nachabscheidung oder -Feinabscheidung ermöglicht.

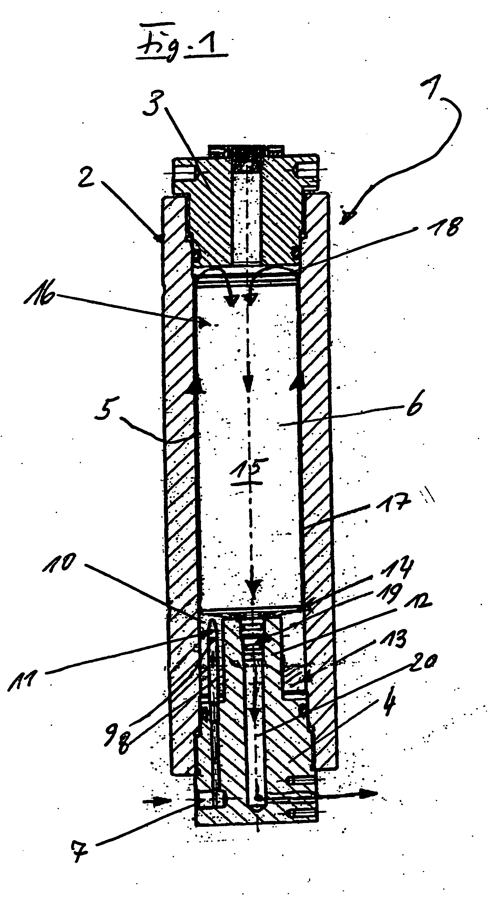

Die Erfindung wird nachstehend an Hand einer bevorzugten Ausführungsform unter Bezugnahme auf die beigefügte Zeichnung näher erläutert.

Die einzige Figur der Zeichnung zeigt schematisch eine Axialschnittansicht einer Vorrichtung zur Flüssigkeitsabscheidung und Filterung für eine Trocknung und Reinigung von komprimierten Gasen nach der Erfindung.

Die nachstehend beschriebene, bevorzugte Ausführungsform dient lediglich als eines von vielen möglichen Ausführungsbeispielen ohne jeglichen beschränkenden Charakter.

In der einzigen Figur ist insgesamt mit 1 eine Vorrichtung zur Flüssigkeitsabscheidung und Filterung für eine Trocknung und Reinigung von komprimierten Gasen bezeichnet. Als komprimierte Gase kommen insbesondere Druckluft, aber auch andere Gase, wie Stickstoff, Edelgase, Erdgas oder dergleichen, in Betracht. Eine bevorzugte Anwendung der Vorrichtung 1 liegt auf dem Gebiet zur Bereitstellung von unter Druck stehender Atemluft. Bei dieser Anwendung müssen insbesondere alle schädlichen Bestandteile der komprimierten Luft ausgeschieden und entfernt werden, da sonst eine Gesundheitsgefährdung bestehen könnte. Während des Aufbereitungsprozesses von komprimierter Luft oder anderen komprimierten Gasen, insbesondere in Kompressoraggregaten, vermischen sich mit dem komprimierten Gas Öl und andere Stoffe, welche sorgfältig aus der Druckluft ausgebracht werden müssen.

Die erfindungsgemäße Vorrichtung weist einen Behälter 2 auf, welcher vorzugsweise in Form eines Hohlzylinder ausgebildet ist. Der Behälter 2 ist oberseitig mittels eines Deckels 3 und an seiner axial gegenüberliegenden Seite mittels eines Bodenteils 4 geschlossen. Eine Behälterinnenwand 5 begrenzt in Verbindung mit dem Deckel 3 und dem Bodenteil 4 einen Behälterinnenraum 6. Mit 7 ist ein Einlaß für ein komprimiertes Gas bezeichnet, welches beispielsweise von einem nicht näher dargestellten Kompressor kommt. Das über den Einlaß 7 eintretende komprimierte Gas wird durch einen Kanal im Bodenteil 4 über ein Eintrittsröhrchen 8 eingegeben, welches an seinem oberen Ende wenigstens eine Austrittsöffnung 9 hat. Das Einrittsröhrchen 8 ragt in einen Abscheideraum 10 einer Zentrifugal-Flüssigkeitsabscheideeinrichtung 11, welcher von einem zapfenförmig vorstehenden Teil 12 des Bodenteils 4 und der Behälterinnenwand 5 umschlossen wird. Der tiefer liegende Bereich des Abscheideraums 10 bildet einen Kondensat-Sammelraum 13, in welchem sich die von dem komprimierten Gasstrom abgetrennte Flüssigkeit, wie Öl und Wasser, sammelt. Die Oberseite des Abscheideraums 10 wird von einem Boden 14 einer Filterpatrone 15 einer Filtereinrichtung 16 zur Trocknung und Reinigung des komprimierten Gases unmittelbar gebildet. Axial oberhalb der Flüssigkeitsabscheideeinrichtung 11 oder axial unmittelbar angrenzend an den Abscheideraum 10 ist in dem Behälterinnenraum 6 die Filtereinrichtung 16 der Zentrifugal-Flüssigkeitsabscheideeinrichtung 11 nachgeschaltet angeordnet, welche die Filterpatrone 15 umfaßt. Die Filterpatrone 15 ist in dem Behälterinnenraum 6 derart angeordnet, daß ein kleiner oder enger Ringspalt 17 zwischen der Behälterinnenwand 5 und der Außenwand der Filterpatrone 15 frei bleibt. Durch diesen engen Rinspalt 16 strömt das die Zentrifugal-Flüssigkeitsabscheideeinrichtung 11 austrittsseitig verlassende komprimierte Gas an der Filterpatrone 15 entlang und tritt dann an der dem Boden 14 gegenüberliegenden Stirnseite 18 in die Filterpatrone 15 ein. Der Deckel 3 des Behälters 2 ist derart eingesetzt, daß ein Zwischenraum zwischen der Stirnfläche des Deckels im Behälterinnenraum 6 und der Eintrittsseite oder Stirnseite 18 der Filtereinrichtung 16 zur Strömungsumlenkung vorhanden ist. Nach dem Durchgang durch die Filterpatrone 15 tritt der komprimierte Gasstrom über einen Auslaß 19 aus und wird dann über einen Verbindungskanal 20 am Bodenteil 4 des Behälters 2 zur Außenseite hin abgeleitet. Der Auslaß 19 der Filtereinrichtung 16 liegt bei der dargestellten bevorzugten Ausführungsform höher als der Flüssigkeitspegel im Kondensatsammelraum 13.

Somit ist allein durch die konstruktive Auslegung der erfindungsgemäßen Vorrichtung 1 sichergestellt, daß sich das Kondensat in dem Kondensatsammelraum 13 nicht mehr mit dem Gasstrom vermischen kann, welcher die Filtereinrichtung 16 über den Auslaß 19 verläßt.

Obgleich nicht näher dargestellt ist, kann der Kondensatsammelraum 13 mit einer nicht näher dargestellten Ablaßeinrichtung verbunden werden, so daß der Kondensatsammelraum 13 von Zeit zu Zeit entleert werden kann.

Bei der erfindungsgemäßen Vorrichtung 1 sind somit die Zentrifugal-Flüssigkeitsabscheideeinrichtung 11 und die Filtereinrichtung 16 axial hintereinanderliegend im Behälterinnenraum 6 angeordnet. Als Trennung zwischen dem Abscheideraum 10 und der Filtereinrichtung 16 dient unmittelbar der Boden 14 der Filterpatrone 15. Somit ist bei der erfindungsgemäßen Vorrichtung 1 der Durchmesser derselben durch den Durchmesser der Filterpatrone 15 der Filtereinrichtung 16 und die Gehäusewanddicke des Behälters 2 bestimmt. Die Wanddicke des Behälters 2 ist durch die Druckbelastungen im Behälterinnenraum 6 bestimmt. Hierdurch erhält man nach der Erfindung eine Vorrichtung 1, welche hinsichtlich ihres maximalen Durchmessers optimiert und minimiert ist.

Da ferner im Behälterinnenraum 6 auch keine zusätzlichen Einrichtungen beispielsweise für die Trennung von Abscheideraum 10 und Filtereinrichtung 16 erforderlich sind, kann auch der Behälterinnenraum 6 für die funktionstechnische Bestimmung der Vorrichtung 1 nach der Erfindung optimal genutzt werden. Auch ergeben sich konstruktive Vereinfachungen, da zusätzliche Einbauteile bei der Vorrichtung 1 nach der Erfindung entfallen können.

Nachstehend soll kurz die Funktionsweise der Vorrichtung 1 zur Flüssigkeitsabscheidung und Filterung für eine Trocknung und Reinigung von komprimierten Gasen näher erläutert werden.

Wie mit Strömungspfeilen in der einzigen Figur dargestellt ist, tritt das komprimierte Gas, beispielsweise von einem Kompressor kommend, über einen Einlaß 7 im Bodenteil 4 des Behälters 2 in ein Eintrittsröhrchen 8 ein, welches in den Abscheideraum 10 der Zentrifugal-Flüssigkeitsabscheideeinrichtung 11 ragt. Dieses komprimierte Gas ist mit Flüssigkeit, wie Wasser oder dergleichen, beladen, und tritt über die Austrittsöffnung 9 am Ende des Eintrittsröhrchens 8 aus, und wird im wesentlichen horizontal und tangential gegen die gegenüberliegende Behälterinnenwand 5 gelenkt. Somit trennt die Zentrifugal-Flüssigkeitsabscheideeinrichtung 11 im Abscheideraum Flüssigkeit von dem komprimierten Gasstrom ab, welches sich als Kondensat in dem Kondensat-Sammelraum 13 sammelt. Der komprimierte Gasstrom verläßt die Zentrifugal-Flüssigkeitsabscheideeinrichtung 11 in Richtung des schmalen und engen Ringspalts 17 zwischen der Behälterinnenwand 5 und der Filterpatrone 15 der axial nachgeschalteten Filtereinrichtung 16. In diesem engen Ringspalt 17 wird der komprimierte Gasstrom beschleunigt und steigt in Form einer Spiralströmung zur Stirnseite oder Eintrittsseite 18 der Filtereinrichtung 16 auf. Im Bereich des engen Ringspalts 17 erfolgt eine weitere Nachabscheidung oder Feinabscheidung der im komprimierten Gasstrom enthaltenen Flüssigkeit. Die im Bereich des engen Ringspalts 17 abgeschiedene Flüssigkeit läuft an der Behälterinnenwand 5 in Richtung nach unten und gelangt in den Kondensat-Sammelraum 13. Nach Verlassen des Ringspalts 17 wird der komprimierte Gasstrom durch die Stirnseite des Deckels 3 in axialer Richtung umgelenkt und tritt über die Stirnseite 18 in die Filterpatrone 15 der Filtereinrichtung 16 ein. In der Filterpatrone 15 erfolgt auf an sich übliche Weise eine weitere Reinigung und Trocknung des komprimierten Gases. Nach dem Durchgang durch die Filterpatrone 15 tritt der komprimierte Gasstrom über den Auslaß 19 aus der Filtereinrichtung 16 aus, welcher über dem Flüssigkeitspegel im Kondensat-Sammelraum 13 liegt. Das komprimierte Gas wird dann über einen Verbindungskanal 20 als fertig behandeltes komprimiertes Gas aus der Vorrichtung 1 abgeleitet,

### Bezugszeichenliste

- 1: Vorrichtung insgesamt
- 2: Behälter
- 3: Deckel
- 4: Bodenteil
- 5: Behälterinnenwand
- 6: Behälterinnenraum
- 7: Einlaß für ein komprimiertes Gas
- 8: Eintrittsröhrchen
- 9: Austrittsöffnung des Eintrittsröhrchens 8
- 10: Abscheideraum
- 11: Zentrifugal-Flüssigkeitsabscheideeinrichtung insgesamt
- 12: Zapfenförmig vorstehendes Teil
- 13: Kondensatsammelraum
- 14: Boden einer Filterpatrone
- 15: Filterpatrone
- 16: Filtereinrichtung insgesamt
- 17: Kleiner, schmaler Ringspalt
- 18: Stirnseite
- 19: Auslaß
- 20: Verbindungskanal

## Patentansprüche

1. Vorrichtung zur Flüssigkeitsabscheidung und Filterung für eine Trocknung und Reinigung von komprimierten Gasen, insbesondere Druckluft, mit einem bodenseitig und oberseitig geschlossenen Behälter (2), in dessen Innenraum (6) eine Zentrifugal-Flüssigkeitsabscheideeinrichtung (11) mit einem Abscheideraum (10) und einem Kondensat-Sammelraum (13) und eine Filtereinrichtung (16), vorzugsweise in Form einer Filterpatrone (15), derart strömungskommunizierend angeordnet sind, dass das in den Behälter (2) eingeleitete komprimierte Gas durch die Flüssigkeitsabscheideeinrichtung (11), dann durch die Filtereinrichtung (16), und das so gereinigte und getrocknete komprimierte Gas zum Auslass des Behälters (über 20) geht, wobei der Behälter (2) in Form eines durchgehenden Hohlzylinders ausgebildet ist, die Flüssigkeitsabscheideeinrichtung (11) der Filtereinrichtung (16) in Form einer Filterpatrone (15) im gemeinsamen Behälter (2) axial vorgeschaltet angeordnet ist, **dadurch gekennzeichnet, dass** die Filterpatrone (15) unter Freilassung eines kleinen Ringspalts (17) zur Behälterinnenwand (5) des gemeinsamen Behälters (2) angeordnet ist, welcher in kommunizierender Verbindung mit der Austrittsseite der Flüssigkeitsabscheideeinrichtung (11) steht, und dass der Boden (14) der axial nachgeschaltet angeordneten Filterpatrone (15) oder eine im gemeinsamen Behälter (2) unterhalb der Filterpatrone (15) angeordnete Trennwand den Abscheideraum (10) der Flüssigkeitsabscheideeinrichtung (11) begrenzt.

2. Vorrichtung nach Anspruch 1, **dadurch gekennzeichnet, dass** das komprimierte Gas im Bereich des Bodens (4) des Behälters in den Abscheideraum (10) der Flüssigkeitsabscheideeinrichtung (11) einleitbar ist, und der Kondensat-Sammelraum (13) im Zusammenwirken mit dem Behälterboden (4) gebildet wird.

3. Vorrichtung nach einem der vorangehenden Ansprüche, **dadurch gekennzeichnet, dass** das komprimierte Gas über ein Eintrittsröhrchen (8) einleitbar ist, welches sich in den Abscheideraum (10) der Flüssigkeitsabscheideeinrichtung (11) erstreckt, und wenigstens eine Austrittsöffnung (9) in der Nähe des oberen Endes hat.

4. Vorrichtung nach einem der vorangehenden Ansprüche, **dadurch gekennzeichnet, dass** der Kondensat-Sammelraum (13) den tiefer liegenden Bereich des Abscheideraums (10) bildet.

5. Vorrichtung nach einem der vorangehenden Ansprüche, **dadurch gekennzeichnet, dass** die Austrittsseite (19) der Filtereinrichtung (16) axial beabstandet vom Kondensat-Sammelraum (13) angeordnet ist.

## Claims

1. Fluid-separation and filtration apparatus for drying and cleaning compressed gases, especially compressed air, having a container (2) sealed at the top and bottom in whose interior (6) a centrifugal fluid-separation device (11), having a separating chamber (10) and a condensate collecting chamber (13), and a filtration unit (16), preferably in the form of a filter cartridge (15), are arranged in a flow-enabling manner such that the compressed introduced fed into the container (2) passes through the fluid-separation device (11), then through the filtration unit (16), and the compressed gas thus cleaned and dried flows to the container outlet (above 20), the container (2) being made as a continuous hollow cylinder and the fluid-separation device (11) being positioned axially upstream from the filtration device (16) in the form of a filter cartridge (15) in the same container (2), **characterised in that** a small annular gap (17) is left between the filter cartridge (15) and the container inner wall (5) of the shared container (2), which is in communication with the outlet side of the fluid-separation device (11), and **in that** the base (14) of the axially downstream filter cartridge (15) or a partition positioned in the shared container (2) below the filter cartridge (15) delimits the separating chamber (10) of the fluid-separation device (11).

2. Apparatus according to Claim 1, **characterised in that** the compressed gas can be introduced into the separating chamber (10) of the fluid-separation device (11) near the base (4) of the container, and the condensate collecting chamber (13) is formed in conjunction with the container base (4).

3. Apparatus according to one of the preceding Claims, **characterised in that** the compressed gas can be introduced via an inlet tube (8) which extends into the separating chamber (10) of the fluid-separation device (11) and has at least one outlet aperture (9) near the upper end.

4. Apparatus according to one of the preceding Claims, **characterised in that** the condensate collecting chamber (13) forms the lower part of the separating chamber (10).

5. Apparatus according to one of the preceding Claims, **characterised in that** the outlet side (19) of the filtration unit (16) is axially distanced from the condensate collecting chamber (13).

## Revendications

1. Dispositif de séparation de liquide et de filtration pour le séchage et la purification de gaz comprimés, en particulier d'air comprimé, avec un récipient (2) fermé côté fond et côté dessus, dans l'espace intérieur (6) duquel sont disposés un dispositif de séparation de liquide centrifuge (11) avec une chambre de séparation (10) et une chambre de collecte du produit de condensation (3), ainsi qu'un dispositif de filtration (16), de préférence en forme de cartouche filtrante (15), de sorte que les courants communiquent, le gaz introduit dans le récipient (2) passant à travers le dispositif de séparation de liquide (11), puis à travers le dispositif de filtration (16) et le gaz comprimé, ainsi purifié et séché, se dirigeant vers la sortie du récipient (via 20), le récipient (2) étant conçu en forme de cylindre creux d'un seul tenant et le dispositif de séparation de liquide (11) du dispositif de filtration (16) en forme de cartouche filtrante (15) étant disposé axialement en amont dans le récipient (2) commun, **caractérisé en ce que** la cartouche filtrante (15) est disposée, en laissant libre une petite fente annulaire (17) par rapport à la paroi interne (5) du récipient (2) commun, lequel est relié, de façon à communiquer avec le côté sortie du dispositif de séparation de liquide (11), et **en ce que** le fond (14) de la cartouche filtrante (15) disposée axialement en aval ou une paroi de séparation disposée au-dessous de la cartouche filtrante (15) dans le récipient (2) commun délimite la chambre de séparation (10) du dispositif de séparation de liquide (11).

2. Dispositif suivant la revendication 1, **caractérisé en ce que** le gaz comprimé peut être introduit dans la chambre de séparation (10) du dispositif de séparation de liquide (11), au niveau du fond (4) du récipient, et **en ce que** la chambre de collecte du produit de condensation (13) est formée grâce au concours avec le fond (4) du récipient.

3. Dispositif suivant une des revendications précédentes, **caractérisé en ce que** le gaz comprimé peut être introduit via un tube d'entrée (8), qui s'étend dans la chambre de séparation (10) du dispositif de séparation de liquide (11) et qui présente une ouverture de sortie (9) au moins, à proximité de l'extrémité supérieure.

4. Dispositif suivant une des revendications précédentes, **caractérisé en ce que** la chambre de collecte du produit de condensation (13) forme la zone plus profonde de la chambre de séparation (10).

5. Dispositif suivant une des revendications précédentes, **caractérisé en ce que** le côté sortie (19) du dispositif de filtration (16) est disposé axialement distancé de la chambre de collecte du produit de condensation (13).
